Europäisches Patentamt

European Patent Office

Office européen des brevets

(19)

(11) Publication number: **0 075 934**
**B1**

## EUROPEAN PATENT SPECIFICATION

(12)

(45) Date of publication of patent specification: **23.04.86**

(21) Application number: **82108987.7**

(22) Date of filing: **29.09.82**

(51) Int. Cl.⁴: **C 04 B 33/14,** B 44 C 3/04 //
A63H33/00

(54) Clay capable of changing colour and method for its production.

(30) Priority: 30.09.81 JP 145429/81 u
25.06.82 JP 110164/82
25.06.82 JP 110165/82

(43) Date of publication of application:
06.04.83 Bulletin 83/14

(45) Publication of the grant of the patent:
23.04.86 Bulletin 86/17

(84) Designated Contracting States:
DE FR GB

(56) References cited:
None

(73) Proprietor: Kawashima, Kiyoharu
5-7, Esakacho 5-chome
Suitashi Osaka-fu (JP)

(72) Inventor: Kawashima, Kiyoharu
5-7, Esakacho 5-chome
Suitashi Osaka-fu (JP)

(74) Representative: Türk, Dietmar, Dr. rer. nat. et al
Redies, Redies, Türk & Gille Patentanwälte
Brucknerstrasse 20
D-4000 Düsseldorf 13 (DE)

Courier Press, Leamington Spa, England.

EP 0 075 934 B1

# 0 075 934

**Description**

This invention relates to a clay set which discolors by being kneaded and more particularly to a clay set which is composed of discoloring clays and a pH-regulating clay and is made changeable in color multifariously, now coloring, now decoloring, and further now discoloring the clays according to the variation of pH by mixing the discoloring clays and the pH-regulating clay by kneading.

Heretofore, clay which is widely used as a plaything, for example, has appeared on the market in the form of what is called colored clay previously being made contained some coloring agent. With such a kind of colored clay, the discoloration through kneading is able to be obtained only in the limits of being subordinate to the principle of the three attributes of color, and accordingly there is lacking in unexpectedness and absorbing amusingness.

As the result of studying hard with a view to more elevating the amusingness of the clay modelling, the author of this invention has found out a new-typed set of clay which makes possible the multifarious coloration, discoloration and decoloration of clay by kneading, whereby the clay colored suitably by coloring agents of different kinds not only can go to change in color multifariously in accordance with the mixing degree of the three primary colors of pigment, but also becomes possible to change in color not subordinating to expectable principles of color change, thereby being able to be full of unexpectedness and to enhance the amusingness of clay modeling.

About the clay which is widely used as a plaything for boys and girls or for teaching materials, there are known many kinds of it, such as, for example, what is called inorganic clay made by kneading an aggregate of fine hydrous silicated mineral together with a proper quantity of water, grain flour clay with a grain flour base, plastic clay made up of high molecular elastomer, or paper clay. Out of them, however, inorganic clay is hard to color or discolor on account of its essentially having a peculiar color of earth, while on the other hand paper clay, rubber clay, plastic clay and such like are flawed in colorability, workability and chemicals resistance.

Therefore, when the elaborate workability and distinct coloration is called on for, there is used in general what is called grain flour clay with a grain (for example, wheat, glutinous rice, nonglutinous rice, or potato) flour base. It is because there are especially requested of the clay for handicraft use the properties of higher level such as the workability (elasticity, malleability, ductility), the crack resistance, and further the colorability from the point of view of taste and aesthetic appreciation, in order to make the moldings of complicated form.

On the other hand, it has been proven that when mixing, for example, sodium carbonate as a pH-regulating agent with such kind of grain flour for the purpose of using it in the capacity of the clay set according to the invention, then clotted cores are often yielded therein, wherefore the clay will become lacking in uniformity. Upon this, the author of this invention repeated the scrupulous investigation to make a search for any compounding agent and blending technique of such clay as will be free from the above-mentioned nonuniformity and can meet the properties required, as a result of which the author has discovered that the clay obtained by kneading grain flour with high-molecular elastomer together can eliminate the respective defects of both constituents, wherethrough the above-mentioned properties required of the clay are at once improved synergistically.

On the other hand, wheat flour clay is now being most widely used selectively out of grain flour clay. In order to adopt this wheat flour clay as the clay set according to the invention, when this wheat flour clay is got mixed with alkali such as sodium carbonate, then the clay turns brown through the action of tannin acid substance contained in the constituents, and this color change is further promoted under heated condition. Accordingly, there is raised a mooted point in this case that the distinctness of color of the clay is injured remarkably so that it becomes impossible to regulate the discoloring at will according to preference. Then, the author of this invention kept on studying from the angle of the quality of material of the clay, especially the constituents of grain flour clay and the pH-regulating agent. As a result, it has been confirmed that the above-mentioned phenomenon of metachromasy into brown can be prevented by selecting corn flour as grain flour and a weak basic substance as pH-regulating agent, and preferably by conducting a prescribed heat treatment on the clay, thereby becoming possible to hold fast the distinct coloration in its original condition.

This invention has for its object the provision of a clay set which has the ability of multifariously discoloring correspondingly to the variation of pH, that is, of coloring, decoloring, and further discoloring (changing in color) the clay set by using and kneading discoloring clays and a pH-regulating clay together.

Another object of the invention is to provide a clay set which is excellent in workability, colorability, crack-injuring resistance, and acid-alkali resistance, and which is also free from the occurrence of clotted (lump-shaped) cores.

A further object of the invention is to provide a clay set which is protected from the metachromasy into brown, thereby being able to hold fast the distinctness of color.

These and other objects of the present invention will become apparent from the description hereinafter.

The objects of this invention can be attained by the use of a clay set which consists of, on the one hand, discoloring clays containing a coloring agent which changes color according to the variation of pH, and, on the other hand, a pH-regulating agent which contains an acidic or alkaline pH-regulating agent and which

2

discolors the above-mentioned coloring agent by being kneaded together with the above-mentioned discoloring clay.

If having recourse to the present invention, the discoloration not subordinating to the expectable mixing principles of the three primary colors as well as the coloration and the decoloration becomes possible to be made to display itself by kneading the discoloring clays with the pH-regulating clay together.

And also in the present invention, it is possible to improve the workability and the malleability and others of the clay by kneading the grain flour and the high-molecular elastomer together and at the same time to obtain therewith such a clay set as being without clotted cores.

What is more, it is possible according to the present invention to obtain a clay set free from the phenomenon of the metachromasy into brown by using selectively corn flour as grain flour, mixing it with high-molecular elastomer by kneading, and then conducting a prescribed heat treatment on the mixture of the two.

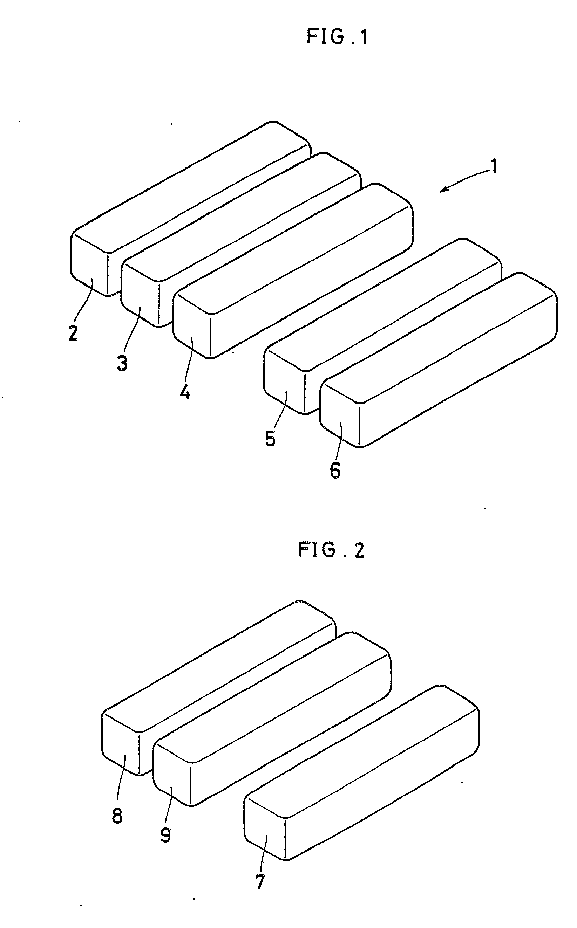

Figs. 1 and 2 are perspective views showing a few examples of the invention.

As seen in the figures, a clay set (1) according to the invention is composed of three discoloring clays (2), (3), (4) and one pH regulating clay (5). These discoloring clays (2), (3), (4) contain the respective coloring agents changing color corresponding to the variation of pH in the clay base consisting of, for example, an inorganic mineral clay, preferably inclined toward white, made up by kneading granules of hydrous silicate mineral with water, or else what is called a plastic clay including high-molecular elastomer, a rubber clay, a fat clay, a paper clay, and further grain flour clay such as a wheat flour clay with a wheat flour base, a buck wheat clay, a rice flour clay, a potato flour clay, a corn flour clay, and the like. Incidentally, the above-mentioned paper clay assumes a white color in a dried state.

The discoloring clay (2) contains about 0.1 to 4 parts of phenolphthalein as the coloring agent to 100 parts of the clay base, and it further regulates pH values from about 7.5 to the pH discoloring limits of phenolphthalein of 8.0 to 9.8 by a content of sodium carbonate of about a half amount of the clay base.

The discoloring clay (3) is made up by containing about 0.03 to 0.05 parts of paranitrophenol and about 0.1 to 0.2 parts of malic acid in the clay base, and regulates pH values to the extent of about 4.5 to the pH-discoloring limits of paranitrophenol 5.6 to 7.6 by commingling this malic acid therein.

The discoloring clay (4) mixes 0.03 to 0.05 parts of α-naphtolphthalein and about 0.3 to 0.5 parts of salt in the clay base, and regulates pH values from about 5 to the pH discoloring limits of α-naphtolphthalein of 7.3 to 8.7. Although α-naphtolphthalein has the acid color of light red, the discoloring clay (4) will not be colored by it because the content of α-naphtolphthalein here is of a relatively small quantity.

On the other hand, the pH-regulating clays (5), (6) contain acidic or alkaline pH-regulating agents. The pH-regulating clay (5) contains as a pH-regulating agent, for example, about 6 to 8 parts of alkaline sodium carbonate to 100 parts of the clay base, while the pH-regulating clay (6) is kept acidic by being made to contain nearly as much citric acid as a pH-regulating agent.

In the clay set (1) according to the invention the discoloring clays (2), (3), (4) are mixed together with the respective proper quantities of the pH-regulating clay (5) by kneading, and each are made to change the respective pH-regulating limits to the alkaline side, so that each of the coloring agents such as phenolphthalein, paranitrophenol, and α-naphtolphthalein goes beyond the respective pH-discoloring limits, whereby the discoloring clay (2) develops color in red, the discoloring clay (3) in yellow, and the discoloring clay (4) in vivid blue. Now when the pH-regulating clay (6) is commingled into the mixture of the clays having thus developed colors, then the respective pH values displace toward to the side of the acidic limits, while the respective clays are neutralized by sodium carbonate previously mixed therein, and thereby come to return to the respective original colors. In this connection, if two different kinds of the above-mentioned mixtures of the clays having developed colors are further mingled each other, there will present the variation of colors akin to the fundamental colors with the mixing of the above-mentioned developed colors.

Fig. 2 shows another example of the invention. The discoloring clay (7) contains γ-dinitrophenol and phenolphthalein as coloring agents, wherein its pH is regulated thereby to about 6.5 to 7, and the pH-regulating clays (8), (9) each are regulated so as to be kept acidic or alkaline, as in Example 1. Therefore, in this example, γ-dinitrophenol turns yellow when the discoloring clay (7) is made acidic by adding the pH-regulating clay (8) thereto, while it goes beyond the discoloring limits of phenolphthalein by mixing the pH-regulating clay (9) thereinto, and comes to assume a red color.

In this way, the clay set according to the invention, which consists of the discoloring clays containing coloring agents and the pH-regulating clay having a pH-regulating agent, and which has the ability to discolor depending on the discoloring agents through mixing the both clays by kneading, can be made to color and decolor at will, unlike the discolorization with the help of the mixing of conventional colored clays, wherefrom the absorbing interest and unexpectedness of the playing with clay is able to be heightened and the playfulness as a toy is promoted. The clay set according to the invention can be adopted also for experimental use or as teaching materials with the object of identification the color variation by the use of pH indicators and so on.

As coloring agents in this invention, there can be adopted any one of pH indicators, for example, as given in Table 1, which are grouped under several heads such as pH-discoloring limits, acid color, alkali color, etc. Out of the coloring agents, ones whose pH-discoloring limits lie near to neutrality are good from the standpoint of safety, and ones whose color variation is distinct are commentable, and further the pH

3

# 0 075 934

indicators may be used individually, and enable the clays to do discolorization depending on the pH displacement, that is, not subordinating to the principle of the color variation in mingling the three primary colors of pigment, by mixing further several kinds of indicators.

What is more, as coloring agents, it is possible to use, for example, such natural coloring matters as given in Table 2 other than the above-mentioned pH indicators, if only being ones that change in color and others according to the pH variation. At such a time, it is desirable to adopt such ones that are nonpoisonous by nature for reasons of the clay set of this invention being widely used as a plaything.

On the other hand, as the pH-regulating agents other than being designated in the above-mentioned example, it is possible to use, as ones making the clays displace to the side of the acidic limits, a salty solution of weak base and strong acid, a dilute solution of inorganic acid such as hydrochloric acid and the like, metallic salts such as copper sulfate and the like, and further organic acid such as citric acid, tartaric acid and the like, while it is possible to adopt, as the pH-regulating agents for causing the positive displacement of the clays to the alkalinity, a salty solution of strong alkali and weak acid such as sodium carbonate, potassium carbonate, and the like, or a dilute solution of base such as sodium hydroxide and the like. It is also possible to make the pH-regulating clay contain coloring agents of one kind or more. Then the discoloring clay is made to contain phenolphthalein and to develop color in red ahead of time in the basic limits, on the one side, while on the other side the pH regulating clay is mingled with, for example, Methyl Violet and is made to keep the acidity of pH 4 and below by an acidic pH-regulating agent. The clay set consisting of the above-mentioned discoloring and pH-regulating clays can be made so as to vary multifariously between red and blue (blue-purple-red and vice versa) depending on the mixing amount of the both clays.

Incidentally, the term "discoloration" used in this specification means the changing in color such as the color change, for example, from red to blue and vice versa or the like except for the coloration (development in color) of a colorless thing or the decoloration (being deprived of color), and further the multifarious variation of what is called the three characteristics such as lightness, saturation, and so on.

Description will be now directed to another example of this invention.

In this example, there is to be provided a clay set free from clotted (lump-shaped) cores by improving the workability and malleability of it on the basis of using grain flour clay as a clay base and mixing it with high-molecular elastomer by kneading.

Grain flour called here is fine powder made of grain such as wheat, glutinous rice, non-glutinous rice, potato, corn and the like. Although wheat flour is graded into the high-power flour (13% of glutin and more), the middle-power flour (10~13% of glutin), and the low-power flour (10% if glutin and below) according to the glutin content, but any grade of it can be used as wheat flour serviceable in this invention.

As high-molecular elastomer, there are used styrene-butadiene rubber, nitrile rubber, butyl rubber, butadiene rubber, isoprene rubber, urethane rubber, ethylene-propylene rubber, ethylene vinyl acetate rubber, propylene oxide rubber, acrylic rubber, silicone rubber, high molecular rubber, and in addition to these, polyvinyl alcohol, vinyl acetate, partly-hydrolyzed vinyl acetate, and the like, and further the mixtures of proper quantities of the above-designated substances, out of which especially preferable ones are the hydrophilic high molecular elastomers such as, for example, polyvinyl alcohol, partly-hydrolyzed vinyl acetate, carboxymethyl cellulose, CMC, polyvinylpyrrolidone, or polyacrylamide. Such kinds of substances expand their molecules remarkably owing to the repulsive force of the ions in the molecules, and thereby their miscibility with grain flour becomes more uniform, with the result that the clay thus created is bettered in workability and displays the excellent colorability because of its high viscosity, malleability, and ductility.

In order to make vivid the color of coloring agents and at the same time to prevent the fading in color, it is preferable to add to the coloring agents polyhydric alcohol such as ethylene glycol, propylene glycol, glycerine, and/or calcium chloride. The above polyhydric alcohol is added by 10 to 40 parts, preferably by 20 to 30 parts, to 100 parts of the component consisting of grain flour and high-molecular elastomer, while calcium chloride is added by 0.1 to 3 parts thereto.

On the other hand, in order to improve the workability (elasticity, malleability, ductility, and viscosity) of clay, it is preferable to compound a surface active agent and a plasticizer. As the surface active agent, it is possible to use, for example, anionic surface active agents such as soap, alkyl sulfuric acid ester salt, alkylallyl sulfonate, and the like; cationic surface active agents such as alkylamine acetate, alkyl trimethyl chloride, dimethyl alkylamine N-alkyl ethylenediamine, amine 220 and the like; nonionic surface active agents such as sorbitan trioleate, sorbitan monestearate, sorbitan monolaurate, polyoxyethylene sorbitan monooleate, polyoxyethylene stearate, and the like; amphoteric surface active agents such as amino acid and the like; and further high molecular surface active agents. All these surface active agents are compounded usually 1 to 20 parts to 100 parts of the component consisting of grain flour and high-molecular estomer, but if their compounding quantity is over 20 parts, it is not desirable for the reason that the viscosity lowers remarkably.

For the above-mentioned plasticizer, there are used salad oil, dioctyl phthalate (DOP), malenoid oleic acid, trimethyl erucic acid, triethyl erucic acid, and the like. These plasticizers have an effect as lubricants to give the pliability to clay, relax the viscosity of clay and thus prevent the adhesion to hand. The plasticizers are compound by 2 to 20 parts to 100 part of the component consisting of grain flour and high-molecular

4

elastomers, but if the compounding quantity is below 2 parts, it is not effective as the plasticizer, and if over 20 parts, its viscosity goes down remarkably.

In making the clay used in the invention, it is more effective in the main to mix grain flour and hydrophilic high-molecular elastomer by kneading, but in case of hydrophobic high-molecular elastomer is used in place of the above hydrophilic high-molecular elastomer, it is necessary to add some surface active agent thereto. The reason for saying this is that the surface active agent is composed while uniting the hydrophilic group with the hydrophobic group, so that it functions as a binder between the hydrophilic grain flour and the hydrophobic high-molecular elastomer, enabling the both components to commingle uniformly. In this case, it becomes especially important to select the kind of the surface active agent and its quantity to be used in accordance with the correspondent quality of material of the high-molecular elastomer and its quantity being used. Generally speaking, it is a high-molecular surface active agent that is appropriate for this end.

The grain flour clay base of this invention can be made usually on the basis of the mixing technique of grain flour with high-molecular elastomer first by preparing grain flour clay by mixing the respective proper quantities of water, polyhydric alcohol, and plasticizer with 100 parts of grain flour, next by mixing 50 to 200 parts, preferably 20 to 50 parts of hydrophilic high molecular elastomer, for examples, polyvinyl alcohol in the form of an aqueous solution with the grain flour clay previously prepared, and then by commingling the both by kneading.

When several number of clay different in sort, in which various kinds of colorants such as pH indicators have been added to the above-mentioned grain flour clay base, are made combined with an aqueous solution of high-molecular elastomer to which a pH-regulating agent, for example, sodium carbonate has been added, then it becomes possible to obtain a clay set according to the invention wherein the color variation of every kind and sort can be made to occur selectively.

In this example, even when sodium carbonate has been added, it was possible to prevent the clays from yielding clotted cores or becoming nonuniform.

By this way, it goes without saying that to the clay according to the invention are added such components used in general as water, preservatives, thickener, anti-desiccating agent, and other.

Next, there is given under still a further example of the invention.

In this example, corn flour is used, on which is conducted a prescribed heating treatment.

The clay made by using wheat flour as usual changes in brown by the action of the tannin series substance contained when alkali is mingled thereinto. But this phenomenon of metachromasy into brown is prevented by the use of corn flour in place of wheat flour, thereby a clay set of vivid color being able to be obtained.

The corn flour referred-to here is the impalpable powder made by finely grinding corn seeds, which contains about 10% of protein, about 70% of amylum, and about 5% of vegetable fat. pH-regulating clay is regulated by mixing weak basic substance such as, for example, sodium carbonate, calcium carbonate or organic acid base with the above-mentioned corn flour. In order to prevent more effectively the phenomenon of metachromasy into brown of that pH-regulating clay, the following heat treatment is conducted thereon. That is, after mixing the stated quantity of pH-regulating agent such as, for example, sodium carbonate, with the clay, this mixture is heated for 30 to 150 seconds at 70 to 100°C. If such a heating treatment is continued to be conducted for long hours, amylum and protein in the corn flour separate from each other, resulting in that the pH-regulating clay begins to turn brown. Therefore, it is required to discontinue the heating treatment of the pH-regulating clay before the commencement of such a separation and to cool it down quickly. The effect of preventing the discoloration of the clay during controlling the heat treatment and after completing it is heightened when sodium carbonate is used as the pH-regulating agent. It is also permissible to use corn starch whose amylum content is extremely great as corn flour. Because of this corn starch being pure-white and odorless, the clay made by using it is of very good quality, thereby being capable of displaying an especially vivid color without changing in color for its own sake even if being left as it is for long hours.

As for the coloring agents, there are used in this example such ones that are listed in Tables 1 and 2.

Same as in the former example, there can be mix with the clay also in this example polyhydric alcohol, calcium chloride and others for the purpose of making the discoloration be distinct or also some high-molecular elastomer with the object of strengthening the viscosity and preventing the desiccation.

The above polyhydric alcohol is added by 10 to 40 parts, preferably 20 to 30 to 100 parts of corn flour, and calcium chloride is added by 0.1 to 3 parts, preferably 0.5 to 1.5 parts to 100 parts of corn flour.

Example A-1

Preparation of the wheat flour clay (A) having the following composition was made by being mixed to the fullest measure by kneading.

Clay composition (A)

| | part |
|---|---|
| wheat flour (high-powered) | 100 |
| water | 20 |
| ethylene glycol | 10 |
| propylene glycol | 10 |
| salad oil [*1] | 5 |
| calcium chloride | 1 |
| phenolphthalein | 0.4 |
| sodium carbonate [*2] | 0.2 |

[*1]: Salad oil acts as a lubricant for preventing the clay from adhering to hand.
[*2]: In case of sodium carbonate's not being added to, pH of the clay composition was about 5 to 6, while in case of its being added to, pH of the clay composition was about 7.5.

On the other hand, there were prepared discoloring stuffs B and C which both have the ability of making pH of the above-mentioned clay composition vary.

Discoloring stuff (B)

| | part |
|---|---|
| wheat flour (high-powered) | 100 |
| water | 30 |
| ethylene glycol | 20 |
| propylene glycol | 10 |
| salad oil | 5 |
| calcium chloride | 1 |
| sodium carbonate | 10 |

Discoloring stuff (C)

| | part |
|---|---|
| wheat flour (high-powered) | 100 |
| Water | 10 |
| ethylene glycol | 10 |
| propylene glycol | 10 |
| salad oil | 5 |
| calcium chloride | 1 |
| citric acid | 10 |

When having mixed the above-mentioned wheat flour (A) and a proper quantity of the discoloring stuff (B) by kneading, then the vivid red appeared, and when having added and mixed a proper quantity of the discoloring stuff (C) to and with the reddened clay by kneading, then the red color disappeared and returned to the original color of the clay.

6

Example A-2

Preparation of the wheat flour clay (D) having the following composition was made by being mixed to the fullest measure by kneading.

Clay composition (D)

| | part |
|---|---|
| wheat flour (high-powered) | 100 |
| water | 20 |
| ethylene glycol | 10 |
| propylene glycol | 10 |
| salad oil | 5 |
| calcium chloride | 1 |
| paranitrophenol | 0.05 |
| malic acid* | 0.2 |

* pH of the clay composition obtained by adding malic acid was about 4.5 to 4.8.

When having mixed the wheat flour clay (D) and a proper quantity of the discoloring stuff (B) prepared in Example A-1 by kneading, then the vivid yellow appeared, and when having added and mixed a proper quantity of the discoloring stuff (C) to and with the yellow clay by kneading, then the yellow color disappeared and returned to the original color of the clay.

Example A-3

Preparation of the wheat flour clay (E) having the following composition was made by being mixed to the fullest measure by kneading.

Clay composition (E)

| | part |
|---|---|
| wheat flour (middle-powered) | 100 |
| water | 20 |
| ethylene glycol | 10 |
| Glycerin | 10 |
| salad oil | 5 |
| calcium chloride | 0.5 |
| salt | 0.5 |
| α-naphtolphthalein | 0.05 |

pH of the clay composition (E) was about 5 to 6, and the composition did not color at all by the addition of α-naphtolphthalein thereto.

When having mixed the clay composition (E) and a proper quantity of the discoloring stuff (B) in Example A-1 by kneading, then the vivid blue appeared, and when having mixed a proper quantity of the discoloring stuff (C) with this blued clay by kneading, then the blue color disappeared and returned to the original color of the clay.

And further, when having added and mixed a proper quantity of the discoloring stuff (B) to and with the clay composition having returned to its own original color by kneading, then the clay composition colored again in blue.

Example A-4

Preparation of the wheat flour clay (F) having the following composition was made by being mixed to the fullest measure by kneading.

7

# 0 075 934

Clay composition (F)

| | part |
|---|---|
| wheat flour (middle-powered) | 100 |
| water | 20 |
| ethylene glycol | 10 |
| propylene glycol | 10 |
| salad oil | 5 |
| calcium chloride | 1 |
| sodium chloride | 0.5 |
| Thymol Blue | 0.2 |

This clay composition (F) assumed an orange color. When having added and mixed a proper quantity of the discoloring stuff (B) to and with the clay composition by kneading, then a blue color appeared, while on the other hand when having added and mixed a proper quantity of the discoloring stuff (C) to and with this clay composition, then a red color appeared.

Example B-1

Grain flour clay with a grain flour base was prepared by adding high-molecular elastomer thereto at the following compounding ratio.

| | part |
|---|---|
| grain flour (wheat flour) | 43 |
| water | 30 |
| sunwet[*1] | 1 |
| salad oil | 10 |
| polyethylene glycol | 3 |
| surface active agent[*2] | 3 |
| high molecular elastomer | 10 |

[*1] hygroscopic agent (acting as a water-water holding agent)
[*2] alkyl benzenesulfonic acid soda.

For the above-mentioned high-molecular elastomer, there was used the one which was made by adding 8% by weight of ethylene glycol to the aqueous solution of 10% by weight of polyvinyl alcohol. The clay obtained on the basis of the above-mentioned compounding ratio was excellent in elasticity, wherein any crack attributable to torrefaction was hardly perceived.

Example B-2

Grain flour clay with a grain flour base was prepared at the following compounding ratio.

8

|                        | part  |
|------------------------|-------|
| grain flour wheat flour | 43   |
| water                  | 30    |
| sunwet[1]              | 1     |
| salad oil              | 10    |
| polyethylene glycol    | 3     |
| surface active agent[2]| 3     |
| pH indicator[3]        | 0.1   |

[1] hygroscopic agent (acting as a water-holding agent)
[2] alkyl benzenesulfonic acid soda
[3] phenolphthalein

The above-mentioned clay developed a vivid red color, when having mixed by kneading therewith the solution which was made by mixing both 8% by weight of ethylene glycol and 2% by weight of sodium carbonate with the aqueous solution of 10% by weight of polyvinyl alcohol.

Example C-1

pH regulating clay was made in the following composition. As a comparative example, the one of the same composition as the above was also manufactured by using wheat flour clay.

|                          | Blend A in part by weight | Blend B in part by weight |
|--------------------------|---------------------------|---------------------------|
| corn flow                | 100                       | —                         |
| wheat flour (high-powered)| —                        | 100                       |
| water                    | 20                        | 20                        |
| ethylene glycol          | 10                        | 10                        |
| propylene glycol         | 10                        | 10                        |
| calcium chloride         | 1                         | 1                         |
| sodium carbonate         | 0.2                       | 0.2                       |

When the pH regulating clays having the same composition as above were both left as they stood at 30°C for 24 hours, while Blend B made by using wheat flour turned brown, the color change of Blend A made by using corn flour was just a little.

Example C-2

When Blend A in Example C-1 was heated at 80°C for 40 seconds, subsequently was cooled down quickly to about 10°C, and was left as it stood at 30°C for 4 days, then the discoloration of it was hardly perceived. But on the other hand, after the above heating treatment was over, when it was left intact without being quenched, the clay turned brown after about 3 hours.

# 0 075 934

TABLE 1

| name of substance | acidic color | discoloring pH limits | basic color |
|---|---|---|---|
| 1) Benzeneazobenzylamine | | 2.2~3.5 | orange |
| 2) β-dinitrophenol | sans | 2.4~4.0 | yellow |
| 3) benzol yellow | red | " | " |
| 4) dimethyl yellow | " | 2.9~4.0 | " |
| 5) α-dinitrophenol | sans | 2.5~4.4 | " |
| 6) hexamethoxy red | purple red | 2.6~4.6 | sans |
| 7) Methyl orange | red | 3.1~4.4 | orange yellow |
| 8) direct purple | light purple | 3.0~4.6 | blue |
| 9) Bromophenol blue | yellow | " | blue |
| 10) tetrabromophenol blue | " | " | " |
| 11) Methyl Violet | blue | 4.0 | purple |
| 12) bromchlorphenol blue | yellow | 3.2~4.8 | orange |
| 13) benzopurpurin | purple | 3.5~4.5 | orange |
| 14) Congo red | blueish purple | 3.0~5.2 | red |
| 15) dimethyl-α-naphthyl-o-methoxy benzen-p-sulfonic acid | purple | 3.4~4.8 | orange yellow |
| 16) p-ethyl orange | red | " | yellow |
| 17) naphthyl red | " | 3.7~5.0 | " |
| 18) alizarin sulfonic acid type sodium | yellow | 3.7~5.2 | purple |
| 19) p-ethoxy chrysoidine | red | 3.5~5.5 | yellow |
| 20) amphomagenta | " | 4.0~5.0 | blue |
| 21) bromcresol green | orange | 3.8~5.4 | " |
| 22) isopicramic acid | light red | 4.1~5.6 | yellow |
| 23) γ-dinitrophenol | sans | 4.0~5.8 | " |
| 24) resazurin | orange | 3.8~6.5 | dark purple |
| 25) Methyl red | red | 4.4~6.2 | yellow |
| 26) lacmoid | " | 4.4~6.4 | blue |
| 27) cochineal | " | 4.8~6.2 | purple |
| 28) hematoxylon | yellow | 5.0~6.0 | light brown |
| 29) Carmine acid | red | 5.6~6.0 | purple red |

10

TABLE 1 (Cont'd)

| name of substance | acidic color | discoloring pH limits | basic color |
|---|---|---|---|
| 30) hematoxylin | yellow | 5.0~6.0 | purple |
| 31) propyl red | red | 4.8~6.4 | yellow |
| 32) chlorophenol red | yellow | 5.0~6.6 | red |
| 33) heptamethoxi red | red | 5.0~7.0 | sans |
| 34) bromcresol purple | yellow | 5.2~6.8 | purple |
| 35) phenacetorine | light brown | 5.5~6.5 | red |
| 36) bromphenol red | yellow | 5.2~7.0 | red |
| 37) alizarin red | " | 5.5~6.8 | " |
| 38) dibromphenoltetrabromophenol sulfonphthalein | " | 5.6~7.2 | purple |
| 39) p-nitrophenol | sans | 5.6~7.6 | yellow |
| 40) pinachrome | " | 5.8~7.8 | red |
| 41) bromthymol blue | yellow | 6.0~7.6 | blue |
| 42) alizarin blue | " | 6.0~7.6 | green |
| 43) indooxine | red | 6.0~8.0 | blue |
| 44) nitrophenolsulfonphthalein | yellow | 6.5~7.5 | purple |
| 45) azolitmine (litmus) | red | 5.0~8.0 | blue |
| 46) neutral red | " | 6.8~8.0 | yellow |
| 47) aurin (rosolic acid) | yellow | 6.8~8.2 | red |
| 48) Nile blue | blue | 7.0~8.0 | purple red |
| 49) phenol red | yellow | 6.8~8.4 | red |
| 50) m-nitrophenol | sans | " | yellow |
| 51) quinoline blue (cyanine) | " | 6.6~8.6 | blue |
| 52) o-cresolbenzein | yellow | 7.2~8.8 | red |
| 53) dibromvanillidene cyclohexanon | yellowish green | " | orange brown |
| 54) o-cresol red | yellow | 7.2~8.8 | red |
| 55) α-naphtolphthalein | weak red | 7.3~8.7 | blue green |
| 56) di-o-oxystyrylketon | yellow | 7.3~8.7 | green |
| 57) curumine (brilliant yellow) | " | 7.4~8.6 | light brown |
| 58) propyl-α-naphtol orange | " | 7.4~8.9 | red |

TABLE 1 (cont'd.).

| name of substance | acidic color | discoloring pH limits | basic color |
|---|---|---|---|
| 59) ethyl bis(2,4-dinitrophenyl) acetic acid | sans | 7.5~9.1 | blue |
| 60) m-cresol purple | yellow | 7.6~9.2 | purple red |
| 61) tropeoline 0 0 0 | " | 7.6~8.9 | red |
| 62) p-cresolphthalein | sans | 8.2~9.2 | red |
| 63) p-xylenol blue | yellow | 8.0~9.6 | blue |
| 64) Thymol blue | " | " | " |
| 65) phenolphthalein | sans | 8.0~9.8 | purple red |
| 66) o-cresolphthalein | " | 8.2~9.8 | red |
| 67) purpurin | orange | 8.5~9.5 | red purple |
| 68) di-4-oxy-3-ethoxybenziliden-cyclohexanon | yellow | 8.0~10.2 | red |
| 69) α-naphtholbenzein | " | 8.5~9.8 | green |
| 70) Thymol phthalein | sans | 9.3~10.5 | blue |
| 71) bromophenol purple | " | 8.0~12.0 | purple |

TABLE 2

| name of substance | discoloring pH-limits (pH) and colors | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| laccaic acid | orange~orange red ——————— red purple ——→ red orange~red purple | | | | | | | | | | | |
| shikonin | red　red purple　blue purple blue purple | | | | | | | | | | | |
| berry dye | red　red purple　dark indigo | | | | | | | | | | | |
| hibiscus dye | ←scarlet　orange　blue purple→ | | | | | | | | | | | |
| grape rind dye | purple red　red purple　dark indigo | | | | | | | | | | | |
| grape juice dye | purple red　red purple　dark indigo | | | | | | | | | | | |
| corn dye | red　red purple　dark indigo | | | | | | | | | | | |
| lac dye | red orange red　red purple | | | | | | | | | | | |
| beet red dye | red orange | | | | | | | | | | | |

# 0 075 934

### Claims

1. A clay set comprising several kinds of discoloring clays which contain coloring agents changing in color according to the variation of pH, and several kinds of pH-regulating clays which contain acidic or alkaline pH-regulating agents and which discolor said coloring agents by being mixed with said discoloring clays by kneading.

2. A clay set as set forth in claim 1, wherein said coloring agents are pH indicators.

3. A clay set as set forth in claim 1, wherein said discoloring clays and/or said pH-regulating clays consist of the clay base being made by mixing grain flour and at least one kind of high-molecular elastomer with a proper quantity of water by kneading.

4. A clay set as set forth in claim 3, wherein said high-molecular elastomer is hydrophilic high-molecular elastomer.

5. A clay set as set forth in claim 3, wherein said high-molecular elastomer is polyvinyl alcohol.

6. A clay set as set forth in claim 3, which is made by mixing 5 to 200 parts of high-molecular elastomer to 100 parts of grain flour.

7. A clay set as set forth in claim 3, wherein said discoloring clays and/or said pH-regulating clays consist of the clay base being made by mixing grain flour and high-molecular elastomer with surface active agent by kneading.

8. A clay set as set forth in claim 7, wherein said surface active agent is a high-molecular surface active agent.

9. A clay set comprising several kinds of discoloring clays which contain coloring agents changing in color according to the variation of pH, and several kinds of pH-regulating clays which contain acidic or alkaline pH-regulating agents and which discolor said discoloring agents by being mixed with said discoloring clays by kneading; wherein said pH-regulating agents are weak basic substances, and both said discoloring clays and said pH regulating clays are clays with a corn flour base.

10. A clay set as set forth in claim 9, which is characterized in that said pH-regulating clays are made up by being heated at 70° to 100°C for 30 to 150 seconds and subsequently by being subjected to the quenching treatment.

11. A clay set as set forth in claim 9, wherein said weak basic substance is sodium carbonate.

12. A clay set as set forth in claim 9, wherein said corn flour is corn starch.

13. A method of changing the colour of a grain flour clay, characterised by mixing a plastic grain flour clay, containing a colouring agent which changes in colour when the pH exceeds a certain limit, with a material that is capable of making the pH of said clay vary when said material and said clay are kneaded together.

### Patentansprüche

1. Ton-Set, der umfaßt mehrere Arten von sich verfärbenden Tonen, die Färbemittel enthalten, deren Farbe sich entsprechend der Änderung des pH-Wertes ändert, und mehrere Arten von pH-regulierenden Tonen, die saure oder alkalische pH-Reguliermittel enthalten und die Färbemittel verfärben, wenn sie mit den färbenden Tonen durch Kneten gemischt werden.

2. Ton-Set nach Anspruch 1, worin die Färbemittel pH-Indikatoren sind.

3. Ton-Set nach Anspruch 1, worin die sich verfärbenden Tone und/oder die pH-regulierenden Tone bestehen aus der Ton-Basis, die hergestellt wird durch Mischen von Getreidemehl und mindestens einer Art eines hochmolekularen Elastomeren mit einer geeigneten Menge Wasser durch Kneten.

4. Ton-Set nach Anspruch 3, worin das hochmolekulare Elastomere ein hydrophiles hochmolekulares Elastomeres ist.

5. Ton-Set nach Anspruch 3, worin das hochmolekulare Elastomere Polyvinylalkohol ist.

6. Ton-Set nach Anspruch 3, der hergestellt wurde durch Zumischen von 5 bis 200 Teilen des hochmolekularen Elastomeren zu 100 Teilen Getreidemehl.

7. Ton-Set nach Anspruch 3, worin die sich verfärbenden Tone und/oder die pH-regulierenden Tone bestehen aus der Tonbasis, die hergestellt wurde durch Mischen von Getreidemehl und eines hochmolekularen Elastomeren mit einem oberflächenaktiven Agens durch Kneten.

8. Ton-Set nach Anspruch 7, worin das oberflächenaktive Agens ein hochmolekulares oberflächenaktives Agens ist.

9. Ton-Set, der umfaßt mehrere Arten von sich verfärbenden Tonen, die Färbemittel enthalten, die entsprechend der Änderung des pH-Wertes ihre Farbe ändern, und mehrere Arten von pH-regulierenden Tonen, die saure oder alkalische pH-regulierende Agentien enthalten und die Färbemittel verfärben, wenn sie mit den sich verfärbenden Tonen durch Kneten gemischt werden; worin die pH-regulierenden Agentien schwache basische Substanzen sind und sowohl die sich verfärbenden Tone als auch die pH-regulierenden Tone Tone mit einer Getriedemehl-Basis sind.

10. Ton-Set nach Anspruch 9, dadurch gekennzeichnet, daß die pH-regulierenden Tone aufbereitet werden durch 30 bis 150 Sekunden langes Erhitzen auf 70 bis 100°C und anschließende Durchführung einer Abschreckungsbehandlung.

11. Ton-Set nach Anspruch 9, worin die schwache basische Substanz Natriumcarbonat ist.

13

# 0 075 934

12. Ton-Set nach Anspruch 9, worin das Getreidemehl Getreidestärke ist.

13. Verfahren zur Änderung der Farbe eines Getreidemehl-Tons, dadurch gekennzeichnet, daß ein plastischer Getreidemehl-Ton, der ein Färbemittel enthält, das seine Farbe ändert, wenn der pH-Wert einen bestimmten Grenzwert überschreitet, mit einem Material gemischt wird, das den pH-Wert des Tons verändern kann, wenn das Material und der Ton gemeinsam geknetet werden.

**Revendications**

1. Bloc d'argile comprenant plusieurs types d'argiles d'altération de teinte qui contiennent des agents colorants changeant de teinte selon la variation du pH et plusieurs types d'argiles de régulation du pH qui contiennent des agents acides ou alcalins de régulation du pH et qui altèrent la teinte desdits agents colorants par mélange par pétrissage avec lesdites argiles d'altération de teinte.

2. Bloc d'argile selon la revendication 1, dans lequel lesdits agents de coloration sont des indicateurs de pH.

3. Bloc d'argile selon la revendication 1, dans lequel lesdites argiles d'altération de teinte et/ou lesdites argiles de régulation du pH comprennent une argile de base que l'on prépare en mélangeant par pétrissage une farine de grain et au moins un type d'un élastomère de haut poids moléculaire avec une quantité appropriée d'eau.

4. Bloc d'argile selon la revendication 3, dans lequel ledit élastomère de haut poids moléculaire est un élastomère hydrophile de haut poids moléculaire.

5. Bloc d'argile selon la revendication 3, dans lequel ledit élastomère de haut poids moléculaire est l'alcool polyvinylique.

6. Bloc d'argile selon la revendication 3 que l'on prépare en mélangeant 5 à 200 parties d'un élastomère de haut poids moléculaire avec 100 parties de farine de grain.

7. Bloc d'argile selon la revendication 3, dans lequel lesdites argiles d'altération de teinte et/ou lesdites argiles de régulation du pH comprennent une argile de base préparée par mélange par pétrissage de la farine de grain et d'un élastomère de haut poids moléculaire avec un agent tensio-actif.

8. Bloc d'argile selon la revendication 7, dans lequel ledit agent tensio-actif est un agent tensio-actif de haut poids moléculaire.

9. Bloc d'argile comprenant plusieurs types d'argiles d'altération de teinte qui contiennent des agents colorants changeant de couleurs selon la variation du pH et plusieurs argiles de régulation du pH qui renferment des agents acides ou alcalins de régulation du pH et qui altèrent la teinte desdits agents d'altération de teinte par mélange par pétrissage avec lesdites argiles d'altération de teinte; dans lequel lesdits agents de régulation du pH sont des substances faiblement basiques, et lesdites argiles d'altération de teinte et lesdites argiles de régulation du pH sont toutes deux à base de farine de maïs.

10. Bloc d'argile selon la revendication 9, qui est caractérisé en ce que l'on prépare lesdites argiles de régulation du pH par chauffage à 70—100°C pendant 30 à 150 secondes et ensuite on les soumet à un traitement de refroidissement.

11. Bloc d'argile selon la revendication 9, dans lequel ladite substance faiblement basique est le carbonate de sodium.

12. Bloc d'argile selon la revendication 9, dans lequel ladite farine de maïs est l'amidon de maïs.

13. Procédé de changement de la couleur d'une argile de farine de grain, caractérisé en ce qu'on mélange une argile plastique de farine de grain contenant un agent colorant qui change de couleur lorsque le pH dépasse une certaine limite, avec une matière capable de faire varier le pH de ladite argile quand on pétrit ensemble ladite matière et ladite argile.

14

FIG.1

FIG.2